# EUROPEAN PATENT APPLICATION

(11) **EP 4 761 353 A1**
(43) Date of publication of application: **17.06.2026**
(21) Application number: 24850736.0
(22) Date of filing: 08.07.2024
(51) Int. Cl.: H04W 36/00

(54) **INFORMATION TRANSMISSION METHOD AND APPARATUS, AND RELATED DEVICE AND STORAGE MEDIUM**

(30) Priority: 10.08.2023 CN 202311011058
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DONG, Wenjia, Beijing 100053 (CN); XIE, Fang, Beijing 100053 (CN); HU, Nan, Beijing 100053 (CN)
(74) Representative: Herrero & Asociados, S.L.
(86) International application number: PCT/CN2024/104316
(87) International publication number: WO 2025/031085

(57) **Abstract**

Disclosed in the present application are an information transmission method and apparatus, and a related device and a storage medium. The method comprises: a source node executing at least one of the following: sending first information to a first node, sending second information to the first node, sending the second information to a second node, and receiving third information sent by the second node, wherein the first node includes all target nodes associated with a first movement trajectory, or includes a next-hop node corresponding to the source node on a first movement trajectory; the first information includes related information of the entire first movement trajectory, or includes related information of at least one segment of trajectory in the first movement trajectory; the second information is used for indicating whether to feed back the third information, and the third information includes related information of an entire second movement trajectory, or includes related information of at least one segment of trajectory in a second movement trajectory; and the second node includes all target nodes associated with the second movement trajectory, or includes a next-hop node corresponding to the source node on the second movement trajectory. The present application can realize information transmission across a plurality of NG-RAN nodes, and thus can at least solve the problem in the related art of a missing solution for information transmission between a source node and one or more related NG-RAN nodes.

## Description

### CROSS-REFERENCE TO RELATED APPLICATIONS

The present application claims priority of Chinese Patent Application No. 202311011058.1, filed on August 10, 2023, the entire contents of which are hereby incorporated by reference in its entirety.

### TECHNICAL FIELD

The present disclosure relates to the field of communication technologies, and in particular, to an information transmission method, an apparatus, related devices, and a storage medium.

### BACKGROUND

Fifth-generation mobile communication technology (5G) networks require continuous optimization of an increasing number of Key Performance Indicators (KPIs), such as latency, reliability, connection density, user experience, and energy efficiency. Artificial Intelligence (Al)/Machine Learning (ML) technology can provide a powerful tool capable of outputting corresponding strategies through the analysis and automatic processing of collected data, helping operators improve network management and user experience.

Currently, the application of AI/ML in the 5G Next Generation Radio Access Network (NG-RAN) is primarily focused on three scenarios (which can also be understood as Use Cases): Network Energy Saving, Load Balancing, and Mobility Optimization. In these scenarios, collected data may be utilized for AI/ML Model Training and AI/ML Model Management, and AI/ML models may be applied to formulate Inference strategies.

In the Mobility Optimization scenario, a source node with AI/ML application capability can use an AI/ML model to predict the action trajectory (which can also be understood as a movement trajectory) of a specific User Equipment (UE). However, the prediction results of the AI/ML model may be inaccurate. Additionally, the handover delay for the UE to switch to a target node associated with the Predicted UE Trajectory may also fail to meet the service requirements of the UE.

### SUMMARY OF THE DISCLOSURE

To address the related technical problems, the embodiments of the present disclosure provide an information transmission method, an apparatus, related devices, and a storage medium.

A first aspect of the present disclosure provides an information transmission method, applied to a source node, including at least one of the following:
sending first information to a first node;
sending second information to the first node;
sending the second information to a second node; and
receiving third information sent by the second node;
wherein the first node contains all target nodes associated with a first movement trajectory of a terminal, or contains a next hop node corresponding to the source node on the first movement trajectory; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the second node contains all target nodes associated with the second movement trajectory, or contains a next hop node corresponding to the source node on the second movement trajectory.

In the above solution, the first information includes at least one of the following:
an identifier of the terminal;
a generation time of the first movement trajectory;
a validity duration of the first movement trajectory;
related information of the source node;
an identifier of at least one cell associated with the first movement trajectory;
an estimated dwell duration of the terminal in each cell of the at least one cell associated with the first movement trajectory;
a probability of the terminal reaching each movement trajectory among at least one movement trajectory included in the first movement trajectory;
an identifier of a target node corresponding to each cell of the at least one cell associated with the first movement trajectory; and
an accuracy of the first movement trajectory.

In the above solution, the second information includes at least one of the following:
fourth information, indicating whether feedback of the third information is required;
fifth information, indicating at least one target node associated with the third information;
sixth information, indicating specific content included in the third information;
seventh information, indicating feedback of the third information within a first time range;
eighth information, indicating a trigger condition for feeding back the third information; and
ninth information, indicating feedback of the third information in a case where the second movement trajectory is different from the first movement trajectory.

In the above solution, the trigger condition indicated by the eighth information includes at least one of the following:
upon receiving the first information, and after the terminal leaves at least one cell associated with a current target node and successfully accesses a next hop node;
a duration since receiving the first information reaches a first duration;
a generation duration of the first movement trajectory reaches a second duration;
a duration since receiving the second information reaches a third duration; and
a duration since the terminal entered at least one cell associated with a current target node reaches a fourth duration.

In the above solution, the third information includes at least one of the following:
an identifier of the terminal;
a generation time of the first movement trajectory associated with the second movement trajectory;
related information of a target node that generated the second movement trajectory;
an identifier of at least one cell associated with the second movement trajectory;
an identifier of a target node corresponding to each cell of the at least one cell associated with the second movement trajectory; and
dwell time related information of the terminal in each cell of the at least one cell associated with the second movement trajectory.

In the above solution, the sending first information to a first node includes one of the following:
sending the first information to the first node through an Xn interface;
sending the first information to the first node through an NG interface; and
sending the first information to the first node through a third node, wherein the third node has an Xn interface with both the source node and the first node.

In the above solution, when sending the first information to the first node through the third node, the method further includes:
sending tenth information to the third node, wherein the tenth information at least contains an identifier of the first node.

A second aspect of the present disclosure provides an information transmission method, applied to a target node, including at least one of the following:
receiving first information sent by a fourth node;
receiving second information sent by the fourth node;
receiving second information sent by a fifth node; and
sending third information to the fifth node;
wherein the fourth node contains a source node, or contains a previous hop node corresponding to the target node on a first movement trajectory of a terminal; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the fifth node contains the source node, or contains a previous hop node corresponding to the target node on the second movement trajectory.

In the above solution, the first information includes at least one of the following:
an identifier of the terminal;
a generation time of the first movement trajectory;
a validity duration of the first movement trajectory;
related information of the source node;
an identifier of at least one cell associated with the first movement trajectory;
an estimated dwell duration of the terminal in each cell of the at least one cell associated with the first movement trajectory;
a probability of the terminal reaching each movement trajectory among at least one movement trajectory included in the first movement trajectory;
an identifier of a target node corresponding to each cell of the at least one cell associated with the first movement trajectory; and
an accuracy of the first movement trajectory.

In the above solution, the second information includes at least one of the following:
fourth information, indicating whether feedback of the third information is required;
fifth information, indicating at least one target node associated with the third information;
sixth information, indicating specific content included in the third information;
seventh information, indicating feedback of the third information within a first time range;
eighth information, indicating a trigger condition for feeding back the third information; and
ninth information, indicating feedback of the third information in a case where the second movement trajectory is different from the first movement trajectory.

In the above solution, the trigger condition indicated by the eighth information includes at least one of the following:
upon receiving the first information, and after the terminal leaves at least one cell associated with a current target node and successfully accesses a next hop node;
a duration since receiving the first information reaches a first duration;
a generation duration of the first movement trajectory reaches a second duration;
a duration since receiving the second information reaches a third duration; and
a duration since the terminal entered at least one cell associated with a current target node reaches a fourth duration.

In the above solution, the third information includes at least one of the following:
an identifier of the terminal;
a generation time of the first movement trajectory associated with the second movement trajectory;
related information of a target node that generated the second movement trajectory;
an identifier of at least one cell associated with the second movement trajectory;
an identifier of a target node corresponding to each cell of the at least one cell associated with the second movement trajectory; and
dwell time related information of the terminal in each cell of the at least one cell associated with the second movement trajectory.

In the above solution, the sending third information to a fifth node includes one of the following:
sending the third information to the fifth node through an Xn interface;
sending the third information to the fifth node through an NG interface; and
sending the third information to the fifth node through a sixth node, wherein the sixth node has an Xn interface with both the fifth node and the target node.

In the above solution, when sending the third information to the fifth node through the sixth node, the method further includes:
sending eleventh information to the sixth node, wherein the eleventh information at least contains an identifier of the fifth node.

A third aspect of the present disclosure provides an information transmission apparatus, including at least one of the following:
a first sending unit, configured to send first information to a first node;
a second sending unit, configured to send second information to the first node;
a third sending unit, configured to send second information to a second node; and
a first receiving unit, configured to receive third information sent by the second node;
wherein the first node contains all target nodes associated with a first movement trajectory of a terminal, or contains a next hop node corresponding to the source node on the first movement trajectory; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the second node contains all target nodes associated with the second movement trajectory, or contains a next hop node corresponding to the source node on the second movement trajectory.

A fourth aspect of the present disclosure provides an information transmission apparatus, including at least one of the following:
a second receiving unit, configured to receive first information sent by a fourth node;
a third receiving unit, configured to receive second information sent by the fourth node;
a fourth receiving unit, configured to receive second information sent by a fifth node; and
a fourth sending unit, configured to send third information to the fifth node;
wherein the fourth node contains a source node, or contains a previous hop node corresponding to the target node on a first movement trajectory of a terminal; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the fifth node contains the source node, or contains a previous hop node corresponding to the target node on the second movement trajectory.

A fifth aspect of the present disclosure provides a source node, including: a first communication interface and a first processor; wherein the first communication interface is configured to perform at least one of the following:
sending first information to a first node;
sending second information to the first node;
sending the second information to a second node; and
receiving third information sent by the second node;
wherein the first node contains all target nodes associated with a first movement trajectory of a terminal, or contains a next hop node corresponding to the source node on the first movement trajectory; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the second node contains all target nodes associated with the second movement trajectory, or contains a next hop node corresponding to the source node on the second movement trajectory.

A sixth aspect of the present disclosure provides a target node, including: a second communication interface and a second processor; wherein the second communication interface is configured to perform at least one of the following:
receiving first information sent by a fourth node;
receiving second information sent by the fourth node;
receiving second information sent by a fifth node; and
sending third information to the fifth node;
wherein the fourth node contains a source node, or contains a previous hop node corresponding to the target node on a first movement trajectory of a terminal; the first movement trajectory includes at least one predicted movement trajectory of the terminal;
wherein the first information includes complete related information of the first movement trajectory, or includes related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal;
wherein the fifth node contains the source node, or contains a previous hop node corresponding to the target node on the second movement trajectory.

A seventh aspect of the present disclosure provides a source node, including: a first processor and a first memory for storing a computer program capable of running on the processor; wherein the first processor is configured to run the computer program to perform any of the methods on the source node side mentioned above.

An eighth aspect of the present disclosure provides a target node, including: a second processor and a second memory for storing a computer program capable of running on the processor; wherein the second processor is configured to run the computer program to perform any of the methods on the target node side mentioned above.

A ninth aspect of the present disclosure provides a storage medium, storing a computer program; wherein the computer program, when executed by a processor, implements any of the methods on the source node side mentioned above, or implements any of the methods on the target node side mentioned above.

In the information transmission method, apparatus, related device, and storage medium provided by the embodiments of the present disclosure, the source node performs at least one of the following: sending first information to a first node; sending second information to the first node; sending the second information to a second node; and receiving third information sent by the second node. The target node performs at least one of the following: receiving first information sent by a fourth node; receiving second information sent by the fourth node; receiving second information sent by a fifth node; and sending third information to the fifth node. The first node contains all target nodes associated with a first movement trajectory of a terminal, or contains a next hop node corresponding to the source node on the first movement trajectory; the first movement trajectory includes at least one predicted movement trajectory of the terminal. The first information contains complete related information of the first movement trajectory, or includes related information of at least one trajectory segment in the first movement trajectory. The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal. The second node contains all target nodes associated with the second movement trajectory, or contains a next hop node corresponding to the source node on the second movement trajectory. The fourth node contains the source node, or contains a previous hop node corresponding to the target node on the first movement trajectory. The fifth node contains the source node, or contains a previous hop node corresponding to the target node on the second movement trajectory.

The information transmission methods provided by the embodiments of the present disclosure may, on one hand, propose two transmission mechanisms for the transmission of related information of the predicted terminal movement trajectory (i.e., the aforementioned first information). One transmission mechanism (i.e., the aforementioned first transmission mechanism) is that the source node sends the related information of the predicted terminal movement trajectory to all target nodes associated with the predicted terminal movement trajectory; the other transmission mechanism (i.e., the aforementioned second transmission mechanism) is that the source node sends the related information of the predicted terminal movement trajectory to the predicted next hop node, and the target node receives the related information of the predicted terminal movement trajectory from the predicted previous hop node (which may include the source node or other target nodes), that is, the related information of the predicted terminal movement trajectory is sequentially transmitted between the source node and all target nodes associated with the predicted terminal movement trajectory. In this way, all target nodes associated with the predicted terminal movement trajectory can obtain the related information of the predicted terminal movement trajectory, thereby enabling subsequent use of the obtained information to reserve transmission resources in advance to save handover delay, such that the handover delay for the terminal to switch to each target node associated with the predicted terminal movement trajectory can meet the service requirements of the terminal.

On the other hand, two transmission mechanisms are proposed for the transmission of indication information configured to indicate whether to feedback related information of the actual terminal movement trajectory (i.e., the aforementioned second information). One transmission mechanism (i.e., the aforementioned third transmission mechanism) is that the source node sends the indication information to all target nodes associated with the predicted and/or actual terminal movement trajectory; the other transmission mechanism (i.e., the aforementioned fourth transmission mechanism) is that the source node sends the indication information to the predicted and/or actual next hop node, and the target node receives the indication information from the predicted and/or actual previous hop node (which may include the source node or other target nodes), that is, the indication information is sequentially transmitted between the source node and all target nodes associated with the predicted and/or actual terminal movement trajectory. In this way, all target nodes associated with the predicted and/or actual terminal movement trajectory can obtain the indication information for indicating whether to feedback related information of the actual terminal movement trajectory, thereby enabling these target nodes to subsequently feedback the related information of the actual terminal movement trajectory to the source node based on this indication information, that is, enabling the source node to subsequently obtain sufficient related information of the actual terminal movement trajectory to iterate the AI/ML model to improve the capability and performance of the AI/ML model, thereby improving the accuracy of the prediction results of the AI/ML model.

Thirdly, two transmission mechanisms are proposed for the transmission of related information of the actual terminal movement trajectory (i.e., the aforementioned third information). One transmission mechanism (i.e., the aforementioned fifth transmission mechanism) is that all target nodes associated with the actual terminal movement trajectory send the related information of the actual terminal movement trajectory to the source node; the other transmission mechanism (i.e., the aforementioned sixth transmission mechanism) is that the target node sends the related information of the actual terminal movement trajectory to the actual previous hop node (which may include the source node or other target nodes), and the source node receives the related information of the actual terminal movement trajectory from the actual next hop node, that is, the related information of the actual terminal movement trajectory is sequentially transmitted between all target nodes associated with the actual terminal movement trajectory and the source node. In this way, the source node can obtain the related information of the actual terminal movement trajectory fed back by all target nodes associated with the actual terminal movement trajectory, that is, the source node can obtain sufficient related information of the actual terminal movement trajectory, thereby enabling subsequent use of the obtained information to iterate the AI/ML model to improve the capability and performance of the AI/ML model, thereby improving the accuracy of the prediction results of the AI/ML model.

### BRIEF DESCRIPTION OF THE DRAWINGS

FIG. 1 is a schematic diagram of the functional framework of an AI/ML model in the related art.
FIG. 2 is a flowchart of an information transmission method according to some embodiments of the present disclosure.
FIG. 3 is a schematic structural diagram of an information transmission apparatus according to some embodiments of the present disclosure.
FIG. 4 is a schematic structural diagram of another information transmission apparatus according to some embodiments of the present disclosure.
FIG. 5 is a schematic structural diagram of a source node according to some embodiments of the present disclosure.
FIG. 6 is a schematic structural diagram of a target node according to some embodiments of the present disclosure.
FIG. 7 is a schematic structural diagram of an information transmission system according to some embodiments of the present disclosure.

### DETAILED DESCRIPTION

The present disclosure will be described in further detail below with reference to the accompanying drawings and embodiments.

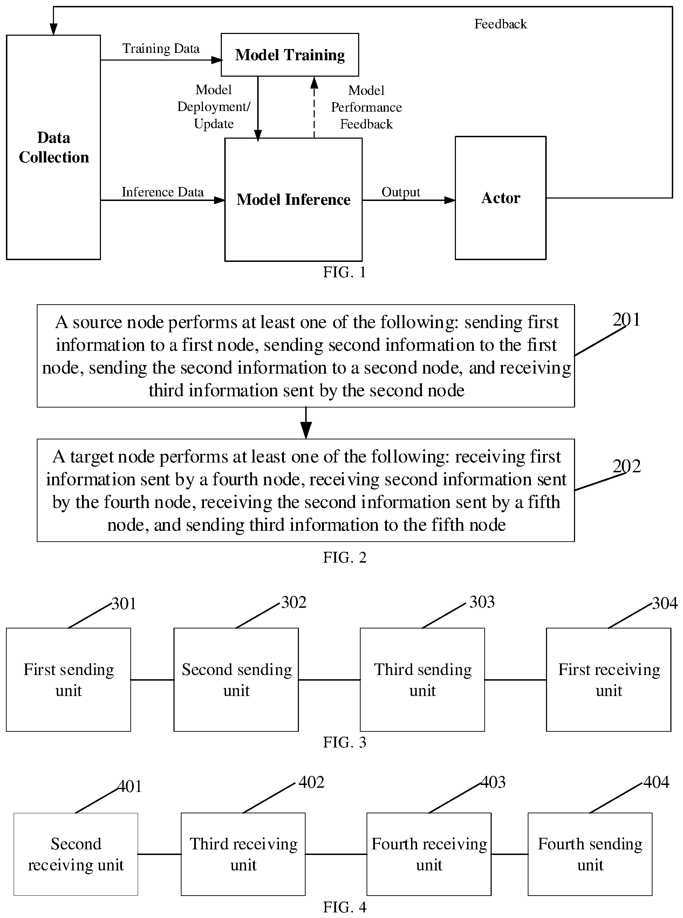

In the related art, as shown in FIG. 1, the functional framework of an AI/ML model may include a Data Collection module, a Model Training module, a Model Inference module, and an Actor module. Among them, the Data Collection module can provide input data to the Model Training module and the Model Inference module. The input data may include measurement data from UEs and different network elements, feedback data from the Actor module, and output data from the AI/ML model. The Data Collection module may only be responsible for providing raw data and does not need to perform different data preparation (such as data cleaning, data formatting, data conversion, etc.) for different AI/ML algorithms.

The Model Training module is responsible for training, testing, and validation/confirmation of the AI/ML model, and generating metrics for model performance. Specifically, the Model Training module may have a Data Preparation function, meaning the Model Training module can organize the data to be trained provided by the Data Collection module (e.g., data cleaning, data formatting, data conversion, etc.). The Model Training module may also have a Model Deployment/Update function, meaning the Model Training module can deploy/update the trained, tested, and validated/confirmed AI/ML model to the Model Inference module.

The Model Inference module can provide inference output (which can also be understood as prediction or decision) of the AI/ML model, and may have a Model Performance Feedback function, meaning the Model Inference module can send model performance feedback results to the Model Training module. These results can be applied to check the performance of the AI/ML model. Additionally, the Model Inference module may further have a Data Preparation function, meaning the Model Inference module can organize the data to be inferred (Inference Data) provided by the Data Collection module (e.g., data cleaning, data formatting, data conversion, etc.).

The Actor module can initiate corresponding actions upon receiving the inference output from the Model Inference module, and can feed back the results of the actions to the Data Collection module. The feedback data from the Actor module may be applied for training, inference, or performance detection of the AI/ML model.

In the Mobility Optimization scenario, a source node with AI/ML application capability can use the Model Inference module to predict the action trajectory (which can also be understood as a movement trajectory) of a specific UE, and can send the Predicted UE Trajectory to a target node. The target node can use this received prediction information to reserve transmission resources in advance. On the other hand, to continuously iterate the AI/ML model, the source node needs to obtain the Measured UE Trajectory (which can also be understood as a real/actual UE trajectory) measured by the target node as feedback. The Measured UE Trajectory may be applied to monitor the inference output performance of the AI/ML model and to retrain the AI/ML model in a timely manner, thereby continuously improving the capability and performance of the AI/ML model.

With increasing deployment requirements and improving AI/ML model capabilities, predicting UE trajectories and collecting data across multiple NG-RAN nodes will become a trend. However, in the related art, a source node only provides predicted UE trajectory information within the range of the next hop node (One Hop Node) (i.e., the target node), and only obtains/collects the Measured UE Trajectory from that target node. Meanwhile, related art also does not define the specific method for obtaining/collecting the Measured UE Trajectory or the specific content of the related information of the Measured UE Trajectory.

From the above description, it can be seen that the related art lacks a solution for transmitting related information of predicted UE trajectories and related information of measured UE trajectories between a source node and multiple associated NG-RAN nodes (i.e., target nodes). That is, the related art cannot support/meet the need for interaction (i.e., transmission) of related information of predicted UE trajectories and related information of measured UE trajectories across multiple NG-RAN nodes. Therefore, other target nodes associated with the predicted UE trajectory, besides the next hop node, may not obtain the related information of the predicted UE trajectory to reserve transmission resources in advance, which may cause the handover delay for the UE to switch to other target nodes to fail to meet the service requirements of the UE. In addition, the source node may also fail to obtain sufficient related information of measured UE trajectories from other target nodes associated with the predicted UE trajectory, besides the next hop node, to iterate the AI/ML model, which may cause the prediction results of the AI/ML model to be inaccurate.

Based on this, in various embodiments of the present disclosure, a transmission mechanism for AI/ML related information (i.e., related information of predicted UE trajectory, indication information for indicating whether to feedback related information of measured UE trajectory, and related information of measured UE trajectory) across multiple NG-RAN nodes is proposed, and the specific content that the aforementioned AI/ML related information transmitted across multiple NG-RAN nodes needs to include is provided.

Specifically, in various embodiments of the present disclosure, on one hand, two transmission mechanisms are proposed for the transmission of related information of the predicted UE trajectory (referred to as related information of predicted terminal movement trajectory in subsequent descriptions). One transmission mechanism is that the source node sends the related information of the predicted terminal movement trajectory to all target nodes associated with the predicted terminal movement trajectory. The other transmission mechanism is that the source node sends the related information of the predicted terminal movement trajectory to the predicted next hop node, and target nodes receive the related information of the predicted terminal movement trajectory from the predicted previous hop node (which may include the source node or other target nodes). That is, the related information of the predicted terminal movement trajectory is sequentially transmitted between the source node and all target nodes associated with the predicted terminal movement trajectory. In this way, all target nodes associated with the predicted terminal movement trajectory can obtain the related information of the predicted terminal movement trajectory, thereby enabling subsequent use of the obtained information to reserve transmission resources in advance to save handover delay, such that the handover delay for the terminal to switch to each target node associated with the predicted terminal movement trajectory can meet the service requirements of the terminal.

On the other hand, two transmission mechanisms are proposed for the transmission of indication information configured to indicate whether to feedback related information of the measured UE trajectory (referred to as related information of actual terminal movement trajectory in subsequent descriptions). One transmission mechanism is that the source node sends the indication information to all target nodes associated with the predicted and/or actual terminal movement trajectory. The other transmission mechanism is that the source node sends the indication information to the predicted and/or actual next hop node, and target nodes receive the indication information from the predicted and/or actual previous hop node (which may include the source node or other target nodes). That is, the indication information is sequentially transmitted between the source node and all target nodes associated with the predicted and/or actual terminal movement trajectory. In this way, all target nodes associated with the predicted and/or actual terminal movement trajectory can obtain the indication information for indicating whether to feedback related information of the actual terminal movement trajectory, thereby enabling these target nodes to subsequently feedback the related information of the actual terminal movement trajectory to the source node based on this indication information. That is, it enables the source node to subsequently obtain sufficient related information of the actual terminal movement trajectory to iterate the AI/ML model and improve its capability and performance, thereby improving the accuracy of the prediction results of the AI/ML model.

Thirdly, two transmission mechanisms are proposed for the transmission of related information of the actual terminal movement trajectory. One transmission mechanism is that all target nodes associated with the actual terminal movement trajectory send the related information of the actual terminal movement trajectory to the source node. The other transmission mechanism is that a target node sends the related information of the actual terminal movement trajectory to the actual previous hop node (which may include the source node or other target nodes), and the source node receives the related information of the actual terminal movement trajectory from the actual next hop node. That is, the related information of the actual terminal movement trajectory is sequentially transmitted between all target nodes associated with the actual terminal movement trajectory and the source node. In this way, the source node can obtain the related information of the actual terminal movement trajectory fed back by all target nodes associated with the actual terminal movement trajectory. That is, the source node can obtain sufficient related information of the actual terminal movement trajectory, thereby enabling subsequent use of the obtained information to iterate the AI/ML model and improve its capability and performance, which can improve the accuracy of the prediction results of the AI/ML model.

Embodiments of the present disclosure provide an information transmission method applied to a source node, including at least one of the following:
sending first information to a first node;
sending second information to the first node;
sending the second information to a second node; and
receiving third information sent by a second node.

The first node contains all target nodes associated with a first movement trajectory of a terminal, or contains a next hop node corresponding to the source node on the first movement trajectory; the first movement trajectory includes at least one predicted movement trajectory of the terminal.

The first information contains complete related information of the first movement trajectory (i.e., the related information of the entire first movement trajectory; similar applies to the following), or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The second node contains all target nodes associated with the second movement trajectory, or contains a next hop node corresponding to the source node on the second movement trajectory.

In practical application, the terminal may be referred to as a UE, and may be referred to as a user or user terminal.

In practical application, the source node and target nodes may include NG-RAN nodes, specifically may include base stations.

In practical application, the first movement trajectory may be called a predicted UE trajectory, a predicted path, etc. The first information may be called related information of the predicted UE trajectory, etc. The second movement trajectory may be called a measured UE trajectory, a real UE trajectory, an actual UE trajectory, an actual path, etc. The second information may be called indication or indication information, etc., and the third information may be called related information of the measured UE trajectory, etc. In addition, the first information, the second information, and the third information may all be called AI/ML related information. Here, it should be noted that the embodiments of the present disclosure do not limit the names of various movement trajectories (first movement trajectory, second movement trajectory) and information (first, second, third, fourth, fifth, sixth, seventh, eighth, ninth, tenth, eleventh information), as long as their functions are realized.

In practical application, the source node can use the AI/ML model shown in FIG. 1 to predict the movement trajectory of the terminal, obtaining the first movement trajectory, i.e., the first information can be understood as information generated by the source node using the AI/ML model shown in FIG. 1. Corresponding to the source node sending the first information to the first node, a target node may receive the first information sent by a fourth node, and the fourth node may contain the source node or contain a previous hop node corresponding to the target node on the first movement trajectory. In other words, the first information can be transmitted through the following two transmission mechanisms.

First transmission mechanism: The source node sends the first information to all target nodes associated with the first movement trajectory.

Second transmission mechanism: The source node sends the first information to a predicted next hop node (i.e., the next hop node corresponding to the source node on the first movement trajectory, which can be understood as a first hop node corresponding to the first movement trajectory), such that the first information is sequentially transmitted between the source node and all target nodes associated with the first movement trajectory.

For the first transmission mechanism, all target nodes associated with the first movement trajectory may include at least one target node, i.e., one or more (at least two) target nodes. Specifically, all target nodes associated with the first movement trajectory can be understood as one or more target nodes to which (i.e., corresponding/associated with) one or more cells that the terminal is predicted to reach after leaving the source cell, as predicted by the source node using the AI/ML model shown in FIG. 1, belong. Through the first transmission mechanism, in a case where network resources are not limited, all target nodes associated with the first movement trajectory is each enabled to obtain in advance the prediction (i.e., the first information) that the terminal is expected to enter a cell associated with the target node itself (e.g., the terminal successfully hands over to a cell associated with the target node), thereby subsequently enabling reservation of transmission resources in advance based on the first information to save handover delay, such that the handover delay for the terminal to switch to each target node associated with the first movement trajectory can meet the service requirements of the terminal. In other words, the first information helps save handover delay, and using the first information can improve user experience in some specific scenarios (such as service scenarios with high latency requirements).

In practical application, for the first transmission mechanism, in a case where network resources are not limited, the first information sent by the source node to each target node associated with the first movement trajectory may be the same. In this case, the first information may contain complete related information of the first movement trajectory. Here, the complete related information of the first movement trajectory can be understood as related information of all first movement trajectories, i.e., the related information of all movement trajectories (i.e., at least one movement trajectory) of the terminal predicted by the source node using the AI/ML model shown in FIG. 1. That is, the related information of the entire movement trajectory corresponding to each predicted movement trajectory of the terminal.

In practical application, for the first transmission mechanism, to save the overhead of transmitting the first information, for each target node associated with the first movement trajectory, the first information sent by the source node to a target node may contain related information of at least one trajectory segment in the first movement trajectory that is associated with that target node (each trajectory segment may correspond to the same or different predicted movement trajectories contained in the first movement trajectory). That is, each target node associated with the first movement trajectory can obtain a part of the information related to itself from the related information of the complete first movement trajectory, thereby saving the overhead of transmitting the first information. For example, the first information sent by the source node to target node A may contain related information of the trajectory of the terminal at the previous hop node of target node A before the terminal enters target node A (i.e., enters a cell associated with target node A), and/or contain related information of the trajectory of the next hop or next N hop nodes after the terminal leaves target node A, where N is an integer greater than 0. In the embodiments of the present disclosure, the terminal entering target node A may mean the terminal handover to the target node, i.e., handover to a cell associated with the target node.

In practical application, for the second transmission mechanism, the first information needs to contain related information of the complete first movement trajectory. In a case where all target nodes associated with the first movement trajectory only include a predicted next hop node, the source node only sends the first information to the predicted next hop node, and the first information only contains related information of the movement trajectory of the terminal within the range of the predicted next hop node. In a case where all target nodes associated with the first movement trajectory include multiple hops (i.e., multiple, at least two) target nodes, the source node sends the first information to the predicted first hop node. After the predicted first hop node receives the first information, it sends the first information to a predicted second hop node (i.e., the second hop node corresponding to the first movement trajectory), and so on, until a predicted last hop node (i.e., the last hop node corresponding to the first movement trajectory) receives the first information. The first information contains related information of the movement trajectory of the terminal within the range of the multiple hop target nodes.

In some embodiments, the first information may include at least one of the following:
an identifier of the terminal;
a generation time (which may also be called generation moment) of the first movement trajectory, i.e., the generation time/moment of this prediction information (i.e., the first information) (which can be understood as the time/moment when the AI/ML model shown in FIG. 1 outputs the first movement trajectory);
a validity duration of the first movement trajectory;
related information of the source node;
identifiers of at least one cell associated with the first movement trajectory;
an estimated dwell time (Time Stay) of the terminal in each cell among the at least one cell associated with the first movement trajectory;
a probability of the terminal reaching each movement trajectory among the at least one movement trajectory included in the first movement trajectory;
an identifier of a target node corresponding to (i.e., to which belongs) each cell among the at least one cell associated with the first movement trajectory; and
an accuracy of the first movement trajectory, which can also be understood as the accuracy of this prediction information (i.e., the first information).

In practical application, the identifier of the terminal may include a first terminal identifier and/or a second terminal identifier. The first terminal identifier represents an identity that the terminal can be recognized by between the source node and one or more target nodes associated with the first movement trajectory, such as 5G-Globally Unique Temporary Identifier (5G-GUTI), etc. The second terminal identifier represents an identity that can be recognized between multiple (i.e., at least two) target nodes associated with the first movement trajectory, such as NG-RAN node UE XnAP ID, etc.

In practical application, the validity duration of the first movement trajectory refers to a period during which this prediction information (i.e., the first information) is referential. After exceeding the validity duration, the first information becomes invalid and can no longer be used as a reference for mobility operations such as transmission resource reservation by target nodes.

In practical application, the specific content contained in the related information of the source node may be set according to requirements. For example, the related information of the source node may at least contain an identifier (e.g., ID) of the source node.

In practical application, the specific representation form of the cell identifier may be set according to requirements. For example, the cell identifier may include a Cell ID, a Global Cell ID, or a Cell Global Identity (CGI), etc. In addition, the specific representation form of the identifiers of the at least one cell associated with the first movement trajectory may be set according to requirements. For example, the specific representation form of the identifiers of the at least one cell associated with the first movement trajectory may be a cell list (a list of cells) containing identifiers of at least one cell. In other words, the first information may contain a first cell list. The first cell list may contain identifiers of one or more cells that the terminal is predicted to reach after leaving the source cell, obtained using the AI/ML model. The one or more cells may belong to one or more target nodes. The cell identifiers contained in the first cell list may be arranged in order of the predicted sequence in which the terminal reaches the cells.

In practical application, in a case where all target nodes associated with the first movement trajectory only include a predicted next hop node, and the first information only contains related information of the terminal's movement trajectory within the range of the predicted next hop node, the identifiers of the at least one cell associated with the first movement trajectory refer to identifiers of one or more target cells belonging to the predicted next hop node.

In practical application, the first cell list may contain, corresponding to the identifier of each cell, the estimated dwell time of the terminal in each cell among the at least one cell associated with the first movement trajectory.

In practical application, the probability of the terminal reaching each movement trajectory among the at least one movement trajectory included in the first movement trajectory may be expressed as the probability of the terminal reaching/entering the target node associated with each movement trajectory, or may be expressed as the probability of the terminal reaching/entering the target cell associated with each movement trajectory. For example, the first cell list may contain, corresponding to the identifier of each cell, a probability, which may include the probability of the terminal reaching/entering the corresponding cell, or may include the probability of the terminal reaching/entering the target node to which the corresponding cell belongs. That is, the source node, using the AI/ML model, may predict multiple next hop nodes or multiple next hop cells for the terminal. Each next hop node or each next hop cell corresponds to at least one movement path (i.e., predicted path, also movement trajectory), thereby forming multiple predicted paths (i.e., the first movement trajectory includes multiple predicted movement trajectories of the terminal). The probability of the terminal reaching/entering each predicted path can be used by target nodes to determine whether to allocate transmission resources in advance for the terminal and/or to determine how many transmission resources to allocate in advance. In other words, when the terminal is at a certain source node, there may be multiple possible next hop target nodes. The probability corresponding to the identifier of each cell contained in the first cell list (i.e., the probability of the terminal reaching/entering the corresponding cell) can be used by the target node corresponding to that cell to determine whether to allocate transmission resources in advance for the terminal and/or to determine how many transmission resources to allocate in advance.

In practical application, in a case where all target nodes associated with the first movement trajectory only include a predicted next hop node, and the first information only contains related information of the terminal's movement trajectory within the range of the predicted next hop node, when there are multiple possible next hop nodes or next hop cells, the cell identifiers contained in the first cell list may be sorted in order based on the probability of the terminal reaching each target node or target cell. That is, the identifier of the target cell with the highest probability of the terminal reaching it can be placed first in the first cell list. Alternatively, the source node may only provide identifiers of one or more target cells corresponding to the next hop node with the highest probability of being reached, or only provide the identifier of the next hop cell with the highest probability of being reached. In other words, the first information (i.e., the related information of at least one trajectory segment in the first movement trajectory) may contain identifiers of one or more target cells corresponding to the next hop node that the terminal has the highest probability of reaching, or may contain the identifier of the next hop cell that the terminal has the highest probability of reaching.

In practical application, in a case where the first movement trajectory includes multiple predicted movement trajectories of the terminal, the source node may, according to the probabilities of the terminal reaching each cell, only choose to provide the identifiers of target cells associated with the movement trajectory that the terminal has the highest probability of reaching among the multiple movement trajectories. In other words, the first information (i.e., the related information of at least one trajectory segment in the first movement trajectory) may contain identifiers of target cells associated with the movement trajectory that the terminal has the highest probability of reaching among the multiple movement trajectories included in the first movement trajectory.

In practical application, for the second transmission mechanism, in a case where one or more target nodes among all target nodes associated with the first movement trajectory do not have AI prediction capability (i.e., cannot predict the terminal's movement trajectory using the AI/ML model), in the first information sequentially transmitted between the source node and all target nodes associated with the first movement trajectory, the second terminal identifier may be updated in real time, while other content besides the second terminal identifier may remain unchanged. In other words, each time the first information is transmitted between different nodes associated with the first movement trajectory, the second terminal identifier (e.g., NG-RAN node UE XnAP ID, etc.) may be determined (which can be understood as updated in the first information) by the sending node (i.e., the target node sending the first information).

In practical application, for the second transmission mechanism, when one or more target nodes among all target nodes associated with the first movement trajectory have AI prediction capability (i.e., can predict the terminal's movement trajectory using the AI/ML model), a target node with AI prediction capability can update one or more of the following items of the first information by combining existing predictions (i.e., the related information of the first movement trajectory predicted by the source node and/or other target nodes besides the current target node) and its own predictions (i.e., the related information of the first movement trajectory predicted by the current target node using an AI/ML model):
the second terminal identifier; when the first information is transmitted between different nodes associated with the first movement trajectory, the second terminal identifier (e.g., NG-RAN node UE XnAP ID, etc.) may be determined by the sending node (i.e., the target node sending the first information); and
the first cell list and related information corresponding to cell identifiers; that is, the sending node can send to the next hop node the first cell list of relevant target nodes that the terminal is predicted to reach after the current node. In other words, the sending node can update, based on its own latest prediction results, the cell identifiers contained in the first cell list in the first information and the related information corresponding to the cell identifiers, such as the estimated dwell time of the terminal in the cell, the probability of reaching the cell, etc.

In practical application, when a target node associated with the first movement trajectory receives multiple (i.e., at least two) pieces of first information for the same terminal, it may select one piece of first information from the received multiple pieces of first information for operations such as transmission resource reservation and pass related information (e.g., for the second transmission mechanism, the target node can pass the received first information or the first information updated by that target node) to the next hop node, based on at least one of the following methods:
selecting the first information that contains a first movement trajectory whose generation time is later; for example, selecting the first information with the latest generation time of the first movement trajectory from the received multiple pieces of first information;
selecting the first information that contains a first movement trajectory whose expiration time corresponding to the validity duration of the included first movement trajectory is later; for example, selecting the first information with the latest expiration time corresponding to the validity duration of the first movement trajectory from the received multiple pieces of first information; and
selecting the first information that contains a first movement trajectory with a higher arrival probability/accuracy; for example, selecting the first information with the highest arrival probability/accuracy of the first movement trajectory from the received multiple pieces of first information.

In practical application, the second information may be understood as configuration or signaling or an Information Element (IE) used for collecting/obtaining the third information. After a target node associated with the first movement trajectory and/or the second movement trajectory receives the second information, it may, based on the second information, feedback the third information to the source node. Corresponding to the source node sending the second information to the first node and/or the second node, a target node may receive the second information sent by the fourth node and/or a fifth node. The fifth node contains the source node, or contains a previous hop node corresponding to the target node on the second movement trajectory. In other words, the second information can be transmitted through the following two transmission mechanisms.

Third transmission mechanism: The source node sends the second information to all target nodes associated with the first movement trajectory, and/or, the source node sends the second information to all target nodes associated with the second movement trajectory.

Fourth transmission mechanism: The source node sends the second information to a predicted next hop node (i.e., the next hop node corresponding to the source node on the first movement trajectory, which can also be understood as a first hop node corresponding to the first movement trajectory), such that the second information is sequentially transmitted between the source node and all target nodes associated with the first movement trajectory; and/or, the source node sends the second information to an actual next hop node (i.e., the next hop node corresponding to the source node on the second movement trajectory, which can also be understood as a first hop node corresponding to the second movement trajectory), such that the second information is sequentially transmitted between the source node and all target nodes associated with the second movement trajectory.

In practical application, for the third transmission mechanism, all target nodes associated with the first movement trajectory/second movement trajectory may include at least one target node, i.e., one or more target nodes.

In practical application, the source node may send the second information to the first node when sending the first information to the first node. That is, for the third transmission mechanism, the source node may send the first information and the second information to all target nodes associated with the first movement trajectory. For the fourth transmission mechanism, the source node may send the first information and the second information to the predicted next hop node, such that the first information and the second information are sequentially transmitted between the source node and all target nodes associated with the first movement trajectory.

In practical application, the specific type of message for carrying the second information may be set according to requirements. For example, the source node may send a Handover Request message to a target node, and the Handover Request message may carry the second information. Alternatively, the source node may send an AI/ML Information Request message to a target node, and the AI/ML Information Request message may carry the second information.

In some embodiments, the second information may include at least one of the following:
fourth information, the fourth information indicating whether feedback of the third information is required;
fifth information, the fifth information indicating at least one target node associated with the third information;
sixth information, the sixth information indicating specific content included in the third information;
seventh information, the seventh information indicating to feedback the third information within a first time range;
eighth information, the eighth information indicating a trigger condition for feeding back the third information; and
ninth information, the ninth information indicating to feedback the third information when the second movement trajectory is different from the first movement trajectory.

In practical application, the fourth information is configured to indicate whether a target node needs to send/feedback the third information corresponding to the terminal. The specific implementation of the fourth information may be set according to requirements. For example, the fourth information may be implemented with 1 bit. When the value of a specific bit is 0, the fourth information indicates that the target node does not need to send/feedback the third information corresponding to the terminal. When the value of the specific bit is 1, the fourth information indicates that the target node needs to send/feedback the third information corresponding to the terminal. Or, when the value of a specific bit is 0, the fourth information indicates that the target node needs to send/feedback the third information corresponding to the terminal, and when the value of the specific bit is 1, the fourth information indicates that the target node does not need to send/feedback the third information corresponding to the terminal.

In practical application, when the fourth information is received, the third information fed back by the target node may include, but is not limited to, identifiers of one or more cells reached by the terminal and/or the duration the terminal stayed in each cell (this duration may be represented by the time the terminal arrived at the cell and the time it left the cell).

In practical application, the fifth information is configured to indicate that the target node needs to send/feedback related information of the actual movement trajectory of the terminal (i.e., the third information) in a one-hop target node or multi-hop target nodes. The one-hop target node or multi-hop target nodes can be understood as the at least one target node associated with the third information. Here, the one-hop target node refers to the current target node (i.e., the target node that received the second information), and the multi-hop target nodes contain the current target node and one or more target nodes that the terminal enters after the current target node. In the embodiments of the present disclosure, the terminal entering one or more target nodes may mean the terminal successfully hands over to the one or more target nodes.

In practical application, the sixth information is configured to indicate the specific content that the target node needs to send/feedback in the third information corresponding to the terminal. This content may include, but is not limited to, identifiers of one or more cells reached by the terminal within each target node and/or the duration the terminal stayed in each cell (this duration may be represented by the time the terminal arrived at the cell and the time it left the cell). When a target node receives the sixth information, it may be defaulted that when the terminal leaves one or more cells contained in that target node and successfully goes to the next hop node, the target node initiates feedback of the third information.

In practical application, the seventh information is configured to indicate that the target node needs to feedback/send the third information of the terminal within the first time range. The first time range may be indicated by a duration, which indicates that the target node needs to feedback the third information of the terminal within that duration starting from the moment the terminal entered the target node. Alternatively, the first time range may be indicated by a start time and a duration information, indicating that the target node needs to feedback the third information of the terminal within that duration starting from that start time. Additionally, when receiving the seventh information, the third information fed back by the target node may include, but is not limited to, identifiers of one or more cells reached by the terminal and/or the duration the terminal stayed in each cell (this duration may be represented by the time the terminal arrived at the cell and the time it left the cell). In some embodiments of the present disclosure, the terminal entering a target node may mean the terminal successfully hands over to the target node.

In some embodiments, the trigger condition indicated by the eighth information may include at least one of the following:
receiving the first information, and the terminal successfully accessing a next hop node after leaving at least one cell associated with the current target node; that is, after the target node receives the first information and the terminal leaves one or more cells contained (i.e., associated) in that target node and successfully proceeds to the next hop node, the target node initiates feedback of the third information;
the duration of receiving the first information reaching a first duration; that is, the target node starts timing from the moment it receives the first information, and when the timing meets the first duration, triggers the target node to feedback the third information;
the generation duration of the first movement trajectory reaching a second duration; that is, the target node starts timing from the generation time of the first movement trajectory (i.e., the generation time of the first movement trajectory contained in the first information), and when the timing meets the second duration, triggers the target node to feedback the third information;
the duration of receiving the second information reaching a third duration; that is, the target node starts timing from the moment it receives the second information, and when the timing meets the third duration, triggers the target node to feedback the third information; and
the duration of the terminal entering at least one cell associated with the current target node reaching a fourth duration; that is, the target node starts timing from the moment the terminal enters one or more cells contained (i.e., associated) in itself, and when the timing meets the fourth duration, triggers the target node to feedback the third information. In some embodiments of the present disclosure, the terminal entering at least one cell associated with the current target node may be the terminal successfully handing over to at least one cell associated with the current target node.

In practical application, the values of durations (first duration, second duration, third duration, fourth duration, etc.) in various embodiments of the present disclosure may be preset according to requirements.

In practical application, for the ninth information, when at least one of the following conditions is met, it may be determined that the second movement trajectory is different from the first movement trajectory:
the cell predicted for the terminal to reach is different from the cell the terminal actually reaches, that is, the target nodes associated with the second movement trajectory are different from the target nodes associated with the first movement trajectory;
the estimated dwell time and the actual dwell time of the terminal in a target cell are different, that is, the estimated dwell time of the terminal in a target cell associated with the first movement trajectory contained in the first information is different from the actual dwell time of the terminal in that cell measured by the target node;
there is a significant difference between the estimated dwell time and the actual dwell time of the terminal in a target cell, for example, the difference between the estimated dwell time and the actual dwell time is greater than a duration difference threshold. The duration difference threshold may be set by the source node and sent to the target node, or the duration difference threshold may be preset on the source node and target node according to requirements.

Here, it can be understood that the ninth information is configured to indicate that the source node allows the target node to trigger feedback of the third information only when a significant difference is found between the third information and the first information (for example, the difference between the estimated dwell time and the actual dwell time is greater than the duration difference threshold).

In practical application, corresponding to the source node receiving the third information sent by the second node (which contains all target nodes associated with the second movement trajectory, or contains the next hop node corresponding to the source node on the second movement trajectory), the target node may send the third information to the fifth node (which contains the source node, or contains the previous hop node corresponding to the target node on the second movement trajectory). In other words, the third information may be transmitted through the following two transmission mechanisms.

Fifth transmission mechanism: All target nodes associated with the second movement trajectory send the third information to the source node.

Sixth transmission mechanism: Target nodes associated with the second movement trajectory send the third information to the previous hop node, such that the third information is sequentially transmitted between all target nodes associated with the second movement trajectory and the source node.

For the fifth transmission mechanism, all target nodes associated with the second movement trajectory may include at least one target node, that is, include one or more (i.e., at least two) target nodes; the third information may contain related information of the entire second movement trajectory of the terminal, or may contain related information of at least one trajectory segment in the second movement trajectory. For example, when all target nodes associated with the second movement trajectory include only one target node, the third information sent by that target node to the source node may contain related information of the entire second movement trajectory of the terminal.

In practical application, the target node associated with the second movement trajectory may find (i.e., determine) the source node based on the related information of the source node (such as the identifier of the source node) carried in the first information and/or the second information.

In practical application, for the sixth transmission mechanism, the third information may contain related information of the entire second movement trajectory of the terminal, or may contain related information of at least one trajectory segment in the second movement trajectory. Additionally, for different target nodes associated with the second movement trajectory, the previous hop node may be one of the following:
a source node that generated the first information;
another target node that sent the first information to the current target node, and this other target node may be the previous hop node of the current target node in the second movement trajectory; and
a previous hop node of the current target node in the second movement trajectory.

In some embodiments, the third information may include at least one of the following:
an identifier of the terminal;
the generation time (which can also be called generation moment) of the first movement trajectory associated with the second movement trajectory, which can be understood as the generation time/moment of the first information associated with the second information;
related information of the target node that generated the second movement trajectory;
identifiers of at least one cell associated with the second movement trajectory;
identifiers of target nodes corresponding to each cell among the at least one cell associated with the second movement trajectory; and
dwell time-related information of the terminal in each cell among the at least one cell associated with the second movement trajectory.

The identifier of the terminal may include the first terminal identifier and/or the second terminal identifier.

In practical application, the specific content contained in the related information of the target node that generated the second movement trajectory may be set according to requirements. For example, the related information of the target node may at least contain the identifier (such as ID) of that target node.

In practical application, the specific representation form of the identifiers of the at least one cell associated with the second movement trajectory may be set according to requirements. For example, the specific representation form of the identifiers of the at least one cell associated with the second movement trajectory may be a cell list containing identifiers of at least one cell. In other words, the third information may contain a second cell list, and the second cell list may contain identifiers of one or more cells that the target node measured the terminal reaching after leaving the source cell; the second cell list may specifically contain at least one of the following:
the actual movement trajectory of the terminal within one or more cells contained (i.e., associated) in this target node (i.e., the current target node), that is, containing identifiers of one or more cells contained in the current target node, and the identifiers of the one or more cells are arranged in the order the terminal actually reached them;
related information of the previous hop cell before the terminal entered the current target node (for example, handed over to the current target node), and the related information of the previous hop cell may at least contain the identifier of the cell; the related information of the previous hop cell may further contain related information of the target node to which the previous hop cell belongs, and the related information of the target node to which the previous hop cell belongs may at least contain the identifier of the target node; and
related information of the next hop cell that the terminal went to after leaving the current target node, and the related information of the next hop cell may at least contain the identifier of the cell; the related information of the next hop cell may further contain related information of the target node to which the next hop cell belongs, and the related information of the target node to which the next hop cell belongs may at least contain the identifier of the target node.

In practical application, the second cell list may further contain, corresponding to the identifier of each cell, dwell time-related information of the terminal in the corresponding cell, and the dwell time-related information may contain at least one of actual dwell duration, actual time of arrival at the cell, and actual time of leaving the cell.

In practical application, in a case where the third information contains related information of at least one trajectory segment in the second movement trajectory, the source node, after receiving the third information fed back by one or more target nodes, may combine and form the actual movement trajectory of the terminal based on the second cell list contained in each third information, thereby obtaining the complete second movement trajectory.

In practical application, in a case where an Xn interface exists between the source node and the target node, the first information, the second information, and the third information may be transmitted through the Xn interface.

Based on this, in some embodiments, the sending the first information to the first node may include: sending the first information to the first node through an Xn interface.

In some embodiments, the sending the second information to the first node may include: sending the second information to the first node through an Xn interface.

In some embodiments, the sending the second information to the second node may include: sending the second information to the second node through an Xn interface.

In some embodiments, the receiving the third information sent by the second node may include: receiving the third information sent by the second node through an Xn interface.

In practical application, in a case where an Xn interface does not exist between the source node and the target node, but an NG interface exists, the first information, the second information, and the third information may be transmitted through the NG interface.

Based on this, in some embodiments, the sending the first information to the first node may include: sending the first information to the first node through an NG interface.

In some embodiments, the sending the second information to the first node may include: sending the second information to the first node through an NG interface.

In some embodiments, the sending the second information to the second node may include: sending the second information to the second node through an NG interface.

In some embodiments, the receiving the third information sent by the second node may include: receiving the third information sent by the second node through an NG interface.

In practical application, in a case where an Xn interface does not exist between the source node and the target node, the first information, the second information, and the third information may be transmitted (i.e., forwarded) through an intermediate target node that has an Xn interface with both the source node and the target node.

Based on this, in some embodiments, the sending the first information to the first node may include: sending the first information to the first node through a third node, where the third node has an Xn interface with both the source node and the first node.

In some embodiments, when sending the first information to the first node through the third node, the method may further include: sending tenth information to the third node, where the tenth information at least contains an identifier of the first node.

In practical application, the tenth information at least contains the identifier of the first node, which may be understood as the tenth information at least contains identifiers of one or more target nodes that do not have an Xn interface with the source node; after receiving the tenth information, the third node may, based on the tenth information, send the first information to the first node.

In practical application, the third node may contain one or more intermediate target nodes. When a target node associated with the first movement trajectory receives the same first information sent by multiple intermediate target nodes, it may only retain one piece of the first information.

In some embodiments, the sending the second information to the first node may include: sending the second information to the first node through the third node.

In some embodiments, the sending the second information to the second node may include: sending the second information to the second node through the third node.

In some embodiments, the receiving the third information sent by the second node may include: receiving the third information sent by the second node through the third node.

Correspondingly, the embodiments of the present disclosure further provide an information transmission method applied to a target node, including at least one of the following:
receiving first information sent by a fourth node;
receiving second information sent by the fourth node;
receiving second information sent by a fifth node; and
sending third information to the fifth node.

The fourth node contains a source node, or contains a previous hop node corresponding to the target node on a first movement trajectory of a terminal, and the first movement trajectory includes at least one predicted movement trajectory of the terminal.

The first information includes complete related information of the first movement trajectory, or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The fifth node contains the source node, or contains a previous hop node corresponding to the target node on the second movement trajectory.

In practical application, when an Xn interface exists between the target node, the source node, and other target nodes, the first information, the second information, and the third information may be transmitted through the Xn interface.

Based on this, in some embodiments, the receiving the first information sent by the fourth node may include: receiving the first information sent by the fourth node through an Xn interface.

In some embodiments, the receiving the second information sent by the fourth node may include: receiving the second information sent by the fourth node through an Xn interface.

In some embodiments, the receiving the second information sent by the fifth node may include: receiving the second information sent by the fifth node through an Xn interface.

In some embodiments, the sending the third information to the fifth node may include: sending the third information to the fifth node through an Xn interface.

In practical application, when an Xn interface does not exist between the target node, the source node, and other target nodes, but an NG interface exists, the first information, the second information, and the third information may be transmitted through the NG interface.

Based on this, in some embodiments, the receiving the first information sent by the fourth node may include: receiving the first information sent by the fourth node through an NG interface.

In some embodiments, the receiving the second information sent by the fourth node may include: receiving the second information sent by the fourth node through an NG interface.

In some embodiments, the receiving the second information sent by the fifth node may include: receiving the second information sent by the fifth node through an NG interface.

In some embodiments, the sending the third information to the fifth node may include: sending the third information to the fifth node through an NG interface.

In practical application, when an Xn interface does not exist between the target node, the source node, and other target nodes, the first information, the second information, and the third information may be transmitted (i.e., forwarded) through an intermediate target node that has an Xn interface with the target node, as well as with the fourth node and/or the fifth node.

Based on this, in some embodiments, the sending the third information to the fifth node may include: sending the third information to the fifth node through a sixth node, where the sixth node has an Xn interface with both the fifth node and the target node.

In some embodiments, when sending the third information to the fifth node through the sixth node, the method may further include: sending eleventh information to the sixth node, where the eleventh information at least contains an identifier of the fifth node.

In practical application, the sixth node may have an Xn interface with both the fourth node and the target node.

Based on this, in some embodiments, the receiving the first information sent by the fourth node may include: receiving the first information sent by the fourth node through the sixth node.

In some embodiments, the receiving the second information sent by the fourth node may include: receiving the second information sent by the fourth node through the sixth node.

In some embodiments, the receiving the second information sent by the fifth node may include: receiving the second information sent by the fifth node through the sixth node.

In practical application, the sixth node may contain one or more intermediate target nodes. Additionally, the intermediate target nodes contained in the sixth node may be the same as or different from the intermediate target nodes contained in the third node, which may be determined based on actual deployment requirements, and no limitation is made thereto.

Correspondingly, the embodiments of the present disclosure further provide an information transmission method, as shown in FIG. 2, the method includes operations at blocks illustrated herein.

At block 201: A source node performs at least one of the following: sending first information to a first node, sending second information to the first node, sending the second information to a second node, and receiving third information sent by the second node.

At block 202: A target node performs at least one of the following: receiving first information sent by a fourth node, receiving second information sent by the fourth node, receiving the second information sent by a fifth node, and sending third information to the fifth node.

The first node contains all target nodes associated with a first movement trajectory of a terminal, or contains a next hop node corresponding to the source node on the first movement trajectory; the first movement trajectory includes at least one predicted movement trajectory of the terminal.

The first information contains complete related information of the first movement trajectory, or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The second node contains all target nodes associated with the second movement trajectory, or contains a next hop node corresponding to the source node on the second movement trajectory.

The fourth node contains the source node, or contains a previous hop node corresponding to the target node on the first movement trajectory.

The fifth node contains the source node, or contains a previous hop node corresponding to the target node on the second movement trajectory.

The information transmission methods provided by the embodiments of the present disclosure may, on one hand, propose two transmission mechanisms for the transmission of related information of the predicted terminal movement trajectory (i.e., the aforementioned first information). One transmission mechanism (i.e., the aforementioned first transmission mechanism) is that the source node sends the related information of the predicted terminal movement trajectory to all target nodes associated with the predicted terminal movement trajectory; the other transmission mechanism (i.e., the aforementioned second transmission mechanism) is that the source node sends the related information of the predicted terminal movement trajectory to the predicted next hop node, and the target node receives the related information of the predicted terminal movement trajectory from the predicted previous hop node (which may include the source node or other target nodes), that is, the related information of the predicted terminal movement trajectory is sequentially transmitted between the source node and all target nodes associated with the predicted terminal movement trajectory. In this way, all target nodes associated with the predicted terminal movement trajectory can obtain the related information of the predicted terminal movement trajectory, thereby enabling subsequent use of the obtained information to reserve transmission resources in advance to save handover delay, such that the handover delay for the terminal to switch to each target node associated with the predicted terminal movement trajectory can meet the service requirements of the terminal.

On the other hand, two transmission mechanisms are proposed for the transmission of indication information configured to indicate whether to feedback related information of the actual terminal movement trajectory (i.e., the aforementioned second information). One transmission mechanism (i.e., the aforementioned third transmission mechanism) is that the source node sends the indication information to all target nodes associated with the predicted and/or actual terminal movement trajectory; the other transmission mechanism (i.e., the aforementioned fourth transmission mechanism) is that the source node sends the indication information to the predicted and/or actual next hop node, and the target node receives the indication information from the predicted and/or actual previous hop node (which may include the source node or other target nodes), that is, the indication information is sequentially transmitted between the source node and all target nodes associated with the predicted and/or actual terminal movement trajectory. In this way, all target nodes associated with the predicted and/or actual terminal movement trajectory can obtain the indication information for indicating whether to feedback related information of the actual terminal movement trajectory, thereby enabling these target nodes to subsequently feedback the related information of the actual terminal movement trajectory to the source node based on this indication information, that is, enabling the source node to subsequently obtain sufficient related information of the actual terminal movement trajectory to iterate the AI/ML model to improve the capability and performance of the AI/ML model, thereby improving the accuracy of the prediction results of the AI/ML model.

Thirdly, two transmission mechanisms are proposed for the transmission of related information of the actual terminal movement trajectory (i.e., the aforementioned third information). One transmission mechanism (i.e., the aforementioned fifth transmission mechanism) is that all target nodes associated with the actual terminal movement trajectory send the related information of the actual terminal movement trajectory to the source node; the other transmission mechanism (i.e., the aforementioned sixth transmission mechanism) is that the target node sends the related information of the actual terminal movement trajectory to the actual previous hop node (which may include the source node or other target nodes), and the source node receives the related information of the actual terminal movement trajectory from the actual next hop node, that is, the related information of the actual terminal movement trajectory is sequentially transmitted between all target nodes associated with the actual terminal movement trajectory and the source node. In this way, the source node can obtain the related information of the actual terminal movement trajectory fed back by all target nodes associated with the actual terminal movement trajectory, that is, the source node can obtain sufficient related information of the actual terminal movement trajectory, thereby enabling subsequent use of the obtained information to iterate the AI/ML model to improve the capability and performance of the AI/ML model, thereby improving the accuracy of the prediction results of the AI/ML model.

In addition, the solutions provided by the embodiments of the present disclosure may enable the information transmission (i.e., transmission of the first information, the second information, and the third information) between the source node and a target node, as well as between the source node and multiple target nodes, to adopt a unified mechanism, realizing an information transmission architecture across multiple NG-RAN nodes (i.e., the first information, the second information, and the third information), thereby at least solving the problem of the lack of an information transmission scheme between the source node and the associated one or more NG-RAN nodes (i.e., target nodes) in the related art.

To implement the method on the source node side in the embodiments of the present disclosure, the embodiments of the present disclosure further provide an information transmission apparatus, set on a source node (integrated or included in the source node), as shown in FIG. 3, the apparatus includes at least one of the following:
a first sending unit 301, configured to send first information to a first node;
a second sending unit 302, configured to send second information to the first node;
a third sending unit 303, configured to send the second information to a second node; and
a first receiving unit 304, configured to receive third information sent by the second node;

The first node contains all target nodes associated with a first movement trajectory of a terminal, or contains a next hop node corresponding to the source node on the first movement trajectory; the first movement trajectory includes at least one predicted movement trajectory of the terminal.

The first information contains complete related information of the first movement trajectory, or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The second node contains all target nodes associated with the second movement trajectory, or contains a next hop node corresponding to the source node on the second movement trajectory.

In some embodiments, the first sending unit 301 is specifically configured to perform one of the following:
sending the first information to the first node through an Xn interface;
sending the first information to the first node through an NG interface; and
sending the first information to the first node through a third node, where the third node has an Xn interface with both the source node and the first node.

In some embodiments, when sending the first information to the first node through the third node, the first sending unit 301 is further configured to send tenth information to the third node, where the tenth information at least contains an identifier of the first node.

In practical application, the first sending unit 301, the second sending unit 302, the third sending unit 303, and the first receiving unit 304 may be implemented by a communication interface in the information transmission apparatus.

To implement the method on the target node side in the embodiments of the present disclosure, the embodiments of the present disclosure further provide an information transmission apparatus, set on a target node (integrated or included in the target node), as shown in FIG. 4, the apparatus includes at least one of the following:
a second receiving unit 401, configured to receive first information sent by a fourth node;
a third receiving unit 402, configured to receive second information sent by the fourth node;
a fourth receiving unit 403, configured to receive the second information sent by a fifth node; and
a fourth sending unit 404, configured to send third information to the fifth node.

The fourth node contains a source node, or contains a previous hop node corresponding to the target node on a first movement trajectory of a terminal, and the first movement trajectory includes at least one predicted movement trajectory of the terminal.

The first information includes complete related information of the first movement trajectory, or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The fifth node contains the source node, or contains a previous hop node corresponding to the target node on the second movement trajectory.

In some embodiments, the fourth sending unit 404 is specifically configured to perform one of the following:
sending the third information to the fifth node through an Xn interface;
sending the third information to the fifth node through an NG interface; and
sending the third information to the fifth node through a sixth node, where the sixth node has an Xn interface with both the fifth node and the target node.

In some embodiments, when sending the third information to the fifth node through the sixth node, the fourth sending unit 404 is further configured to send eleventh information to the sixth node, where the eleventh information at least contains an identifier of the fifth node.

In practical application, the second receiving unit 401, the third receiving unit 402, the fourth receiving unit 403, and the fourth sending unit 404 may be implemented by a communication interface in the information transmission apparatus.

It should be noted that: when the information transmission apparatus provided in the above embodiment performs information transmission, the division of the above program modules is only an example for illustration. In practical applications, the above processing may be allocated to be completed by different program modules as needed, that is, dividing the internal structure of the apparatus into different program modules to complete all or part of the processing described above. In addition, the information transmission apparatus provided in the above embodiments and the information transmission method embodiments belong to the same concept, and the specific implementation process is detailed in the method embodiments, which will not be repeated herein.

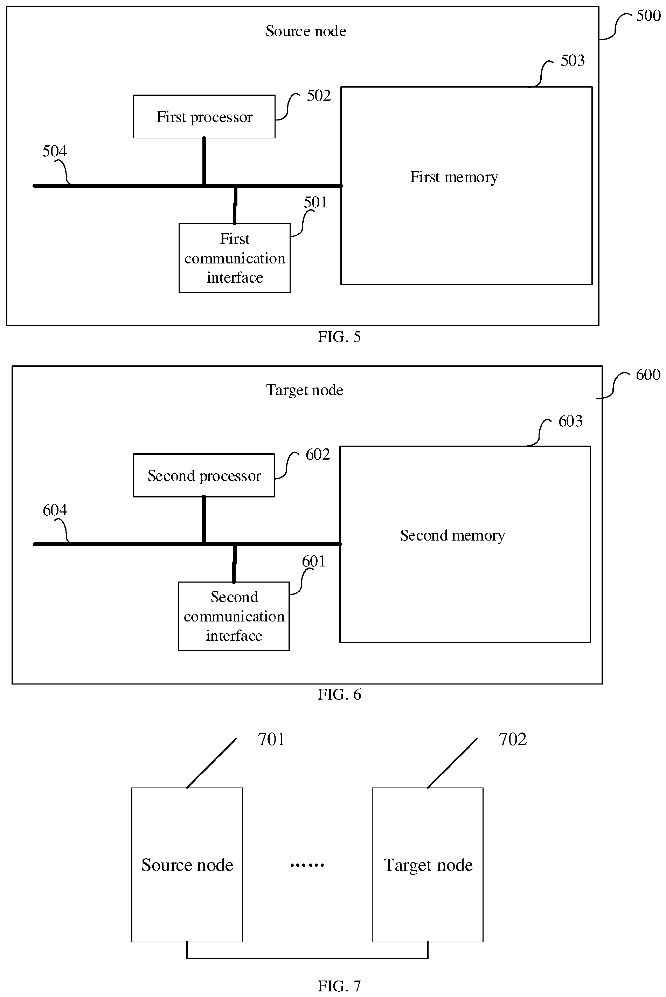

Based on the hardware implementation of the above program modules, and to implement the method on the source node side in the embodiments of the present disclosure, the embodiments of the present disclosure further provide a source node, as shown in FIG. 5, the source node 500 includes:
a first communication interface 501, capable of performing information interaction with a terminal and/or other nodes (such as target nodes, etc.);
a first processor 502, connected to the first communication interface 501 to achieve information interaction with the terminal and/or other nodes, configured to execute the method provided by one or more technical solutions on the source node side when running a computer program; and
a first memory 503, where the computer program is stored on the first memory 503.

Specifically, the first communication interface 501 is configured to perform at least one of the following:
sending first information to a first node;
sending second information to the first node;
sending the second information to a second node; and
receiving third information sent by a second node.

The first node contains all target nodes associated with a first movement trajectory of a terminal, or contains a next hop node corresponding to the source node 500 on the first movement trajectory; the first movement trajectory includes at least one predicted movement trajectory of the terminal.

The first information contains complete related information of the first movement trajectory (i.e., the related information of the entire first movement trajectory; similar applies to the following), or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The second node contains all target nodes associated with the second movement trajectory, or contains a next hop node corresponding to the source node 500 on the second movement trajectory.

In some embodiments, the first communication interface 501 is further configured to perform one of the following:
sending the first information to the first node through an Xn interface;
sending the first information to the first node through an NG interface; and
sending the first information to the first node through a third node, where the third node has an Xn interface with both the source node 500 and the first node.

In some embodiments, when sending the first information to the first node through the third node, the first communication interface 501 is further configured to send tenth information to the third node, where the tenth information at least contains an identifier of the first node.

It should be noted that: the specific processing process of the first communication interface 501 can be understood with reference to the above methods, and will not be repeated herein.

Of course, in practical application, various components in the source node 500 are coupled together through a bus system 504. It can be understood that the bus system 504 is configured to implement connection communication between these components. In addition to a data bus, the bus system 504 further includes a power bus, a control bus, and a status signal bus. However, for clarity, all buses in FIG. 5 are labeled as the bus system 504.

The first memory 503 in the embodiments of the present disclosure is configured to store various types of data to support the operation of the source node 500. Examples of these data include: any computer program for operation on the source node 500.

The methods disclosed in the above embodiments of the present disclosure can be applied to the first processor 502 or implemented by the first processor 502. The first processor 502 may be an integrated circuit chip with signal processing capability. During implementation, each step of the above methods can be completed by hardware integrated logic circuits in the first processor 502 or instructions in the form of software. The first processor 502 may be a general-purpose processor, a digital signal processor (DSP), or other programmable logic devices, discrete gate or transistor logic devices, discrete hardware components, etc. The first processor 502 can implement or execute the disclosed methods, steps, and logic block diagrams in the embodiments of the present disclosure. A general-purpose processor may be a microprocessor or any conventional processor, etc. The steps of the methods disclosed in conjunction with the embodiments of the present disclosure can be directly embodied as being completed by execution of a hardware decoding processor, or by a combination of hardware and software modules in the decoding processor. The software modules can be located in a storage medium, which is located in the first memory 503, and the first processor 502 reads the information in the first memory 503 and completes the steps of the aforementioned method in combination with its hardware.

In exemplary embodiments, the source node 500 may be implemented by one or more Application Specific Integrated Circuits (ASIC), DSPs, Programmable Logic Devices (PLDs), Complex Programmable Logic Devices (CPLDs), Field-Programmable Gate Arrays (FPGAs), general-purpose processors, controllers, Micro Controller Units (MCUs), Microprocessors, or other electronic components, for executing the aforementioned method.

Based on the hardware implementation of the above program modules, and to implement the method on the target node side in the embodiments of the present disclosure, the embodiments of the present disclosure further provide a target node, as shown in FIG. 6, the target node 600 includes:
a second communication interface 601, capable of performing information interaction with a terminal and/or other nodes (such as a source node, other target nodes, etc.);
a second processor 602, connected to the second communication interface 601 to achieve information interaction with the terminal and/or other nodes, configured to execute the method provided by one or more technical solutions on the target node side when running a computer program; and
a second memory 603, where the computer program is stored on the second memory 603.

Specifically, the second communication interface 601 is configured to perform at least one of the following:
receiving first information sent by a fourth node;
receiving second information sent by the fourth node;
receiving the second information sent by a fifth node; and
sending third information to the fifth node.

The fourth node contains a source node, or contains a previous hop node corresponding to the target node 600 on a first movement trajectory of a terminal, and the first movement trajectory includes at least one predicted movement trajectory of the terminal.

The first information includes complete related information of the first movement trajectory, or includes related information of at least one trajectory segment in the first movement trajectory.

The second information is configured to indicate whether to feedback the third information; the third information contains complete related information of a second movement trajectory of the terminal, or contains related information of at least one trajectory segment in the second movement trajectory; the second movement trajectory includes an actual movement trajectory of the terminal.

The fifth node contains the source node, or contains a previous hop node corresponding to the target node 600 on the second movement trajectory.

In some embodiments, the second communication interface 601 is further configured to perform one of the following:
sending the third information to the fifth node through an Xn interface;
sending the third information to the fifth node through an NG interface; and
sending the third information to the fifth node through a sixth node, where the sixth node has an Xn interface with both the fifth node and the target node 600.

In some embodiments, when sending the third information to the fifth node through the sixth node, the second communication interface 601 is further configured to send eleventh information to the sixth node, where the eleventh information at least contains an identifier of the fifth node.

It should be noted that: the specific processing process of the second communication interface 601 can be understood with reference to the above methods, and will not be repeated herein.

Of course, in practical application, various components in the target node 600 are coupled together through a bus system 604. It can be understood that the bus system 604 is configured to implement connection communication between these components. In addition to a data bus, the bus system 604 also includes a power bus, a control bus, and a status signal bus. However, for clarity, all buses in FIG. 6 are labeled as the bus system 604.

The second memory 603 in the embodiments of the present disclosure is configured to store various types of data to support the operation of the target node 600. Examples of these data include: any computer program for operation on the target node 600.

The methods disclosed in the above embodiments of the present disclosure can be applied to the second processor 602 or implemented by the second processor 602. The second processor 602 may be an integrated circuit chip with signal processing capability. During implementation, each step of the above methods can be completed by hardware integrated logic circuits in the second processor 602 or instructions in the form of software. The second processor 602 may be a general-purpose processor, DSP, or other programmable logic devices, discrete gate or transistor logic devices, discrete hardware components, etc. The second processor 602 can implement or execute the disclosed methods, steps, and logic block diagrams in the embodiments of the present disclosure. A general-purpose processor may be a microprocessor or any conventional processor, etc. The steps of the methods disclosed in conjunction with the embodiments of the present disclosure can be directly embodied as being completed by execution of a hardware decoding processor, or by a combination of hardware and software modules in the decoding processor. The software modules can be located in a storage medium, which is located in the second memory 603, and the second processor 602 reads the information in the second memory 603 and completes the steps of the aforementioned method in combination with its hardware.

In exemplary embodiments, the target node 600 may be implemented by one or more ASICs, DSPs, PLDs, CPLDs, FPGAs, general-purpose processors, controllers, MCUs, Microprocessors, or other electronic components, for executing the aforementioned method.

It can be understood that the memory (first memory 503, second memory 603) in the embodiments of the present disclosure can be volatile memory or non-volatile memory, and can also include both volatile and non-volatile memory. Among them, non-volatile memory can be Read Only Memory (ROM), Programmable Read-Only Memory (PROM), Erasable Programmable Read-Only Memory (EPROM), Electrically Erasable Programmable Read-Only Memory (EEPROM), ferromagnetic random access memory (FRAM), Flash Memory, magnetic surface memory, optical disk, or Compact Disc Read-Only Memory (CD-ROM); magnetic surface memory can be disk memory or tape memory. Volatile memory can be Random Access Memory (RAM), which is used as external high-speed cache. By way of example but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memory described in the embodiments of the present disclosure is intended to include, but is not limited to, these and any other suitable types of memory.

To implement the method provided by the embodiments of the present disclosure, the embodiments of the present disclosure further provide an information transmission system, as shown in FIG. 7, the system includes: a source node 701 and at least one target node 702.

It should be noted that: the specific processing processes of the source node 701 and the target node 702 have been detailed above and will not be repeated herein.

In exemplary embodiments, the present disclosure further provides a storage medium, specifically a computer-readable storage medium, for example, including the first memory 503 storing a computer program, the above computer program can be executed by the first processor 502 of the source node 500 to complete the steps of the aforementioned method on the source node side. For another example, including the second memory 603 storing a computer program, the above computer program can be executed by the second processor 602 of the target node 600 to complete the steps of the aforementioned method on the target node side. The computer-readable storage medium can be a memory such as FRAM, ROM, PROM, EPROM, EEPROM, Flash Memory, magnetic surface memory, optical disk, or CD-ROM. In some embodiments, the storage medium can be a non-transitory computer-readable storage medium.

It should be noted that: "first", "second", etc. are intended to distinguish similar objects and are not necessarily to describe a specific order or sequence.

In addition, the technical solutions recorded in the embodiments of the present disclosure may be arbitrarily combined without conflict.

The above are only some embodiments of the present disclosure and are not intended to limit the scope of the present disclosure.

## Claims

1. An information transmission method, applied to a source node, comprising at least one of the following:
sending first information to a first node;
sending second information to the first node;
sending the second information to a second node; and
receiving third information sent by the second node;
wherein the first node contains all target nodes associated with a first movement trajectory of a terminal, or contains a next hop node corresponding to the source node on the first movement trajectory; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the second node contains all target nodes associated with the second movement trajectory, or contains a next hop node corresponding to the source node on the second movement trajectory.

2. The method according to claim 1, wherein the first information comprises at least one of the following:
an identifier of the terminal;
a generation time of the first movement trajectory;
a validity duration of the first movement trajectory;
related information of the source node;
an identifier of at least one cell associated with the first movement trajectory;
an estimated dwell duration of the terminal in each cell of the at least one cell associated with the first movement trajectory;
a probability of the terminal reaching each movement trajectory among at least one movement trajectory included in the first movement trajectory;
an identifier of a target node corresponding to each cell of the at least one cell associated with the first movement trajectory; and
an accuracy of the first movement trajectory.

3. The method according to claim 1, wherein the second information comprises at least one of the following:
fourth information, indicating whether feedback of the third information is required;
fifth information, indicating at least one target node associated with the third information;
sixth information, indicating specific content included in the third information;
seventh information, indicating feedback of the third information within a first time range;
eighth information, indicating a trigger condition for feeding back the third information; and
ninth information, indicating feedback of the third information in a case where the second movement trajectory is different from the first movement trajectory.

4. The method according to claim 3, wherein the trigger condition indicated by the eighth information comprises at least one of the following:
upon receiving the first information, and after the terminal leaves at least one cell associated with a current target node and successfully accesses a next hop node;
a duration since receiving the first information reaches a first duration;
a generation duration of the first movement trajectory reaches a second duration;
a duration since receiving the second information reaches a third duration; and
a duration since the terminal entered at least one cell associated with a current target node reaches a fourth duration.

5. The method according to claim 1, wherein the third information comprises at least one of the following:
an identifier of the terminal;
a generation time of the first movement trajectory associated with the second movement trajectory;
related information of a target node that generated the second movement trajectory;
an identifier of at least one cell associated with the second movement trajectory;
an identifier of a target node corresponding to each cell of the at least one cell associated with the second movement trajectory; and
dwell time related information of the terminal in each cell of the at least one cell associated with the second movement trajectory.

6. The method according to claim 1, wherein the sending first information to a first node comprises one of the following:
sending the first information to the first node through an Xn interface;
sending the first information to the first node through an NG interface; and
sending the first information to the first node through a third node, wherein the third node has an Xn interface with both the source node and the first node.

7. The method according to claim 6, wherein when sending the first information to the first node through the third node, the method further comprises:
sending tenth information to the third node, wherein the tenth information at least contains an identifier of the first node.

8. An information transmission method, applied to a target node, comprising at least one of the following:
receiving first information sent by a fourth node;
receiving second information sent by the fourth node;
receiving second information sent by a fifth node; and
sending third information to the fifth node;
wherein the fourth node contains a source node, or contains a previous hop node corresponding to the target node on a first movement trajectory of a terminal; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the fifth node contains the source node, or contains a previous hop node corresponding to the target node on the second movement trajectory.

9. The method according to claim 8, wherein the first information comprises at least one of the following:
an identifier of the terminal;
a generation time of the first movement trajectory;
a validity duration of the first movement trajectory;
related information of the source node;
an identifier of at least one cell associated with the first movement trajectory;
an estimated dwell duration of the terminal in each cell of the at least one cell associated with the first movement trajectory;
a probability of the terminal reaching each movement trajectory among at least one movement trajectory included in the first movement trajectory;
an identifier of a target node corresponding to each cell of the at least one cell associated with the first movement trajectory; and
an accuracy of the first movement trajectory.

10. The method according to claim 8, wherein the second information comprises at least one of the following:
fourth information, indicating whether feedback of the third information is required;
fifth information, indicating at least one target node associated with the third information;
sixth information, indicating specific content included in the third information;
seventh information, indicating feedback of the third information within a first time range;
eighth information, indicating a trigger condition for feeding back the third information; and
ninth information, indicating feedback of the third information in a case where the second movement trajectory is different from the first movement trajectory.

11. The method according to claim 10, wherein the trigger condition indicated by the eighth information comprises at least one of the following:
upon receiving the first information, and after the terminal leaves at least one cell associated with a current target node and successfully accesses a next hop node;
a duration since receiving the first information reaches a first duration;
a generation duration of the first movement trajectory reaches a second duration;
a duration since receiving the second information reaches a third duration; and
a duration since the terminal entered at least one cell associated with a current target node reaches a fourth duration.

12. The method according to claim 8, wherein the third information comprises at least one of the following:
an identifier of the terminal;
a generation time of the first movement trajectory associated with the second movement trajectory;
related information of a target node that generated the second movement trajectory;
an identifier of at least one cell associated with the second movement trajectory;
an identifier of a target node corresponding to each cell of the at least one cell associated with the second movement trajectory; and
dwell time related information of the terminal in each cell of the at least one cell associated with the second movement trajectory.

13. The method according to claim 8, wherein the sending third information to a fifth node comprises one of the following:
sending the third information to the fifth node through an Xn interface;
sending the third information to the fifth node through an NG interface; and
sending the third information to the fifth node through a sixth node, wherein the sixth node has an Xn interface with both the fifth node and the target node.

14. The method according to claim 13, wherein when sending the third information to the fifth node through the sixth node, the method further comprises:
sending eleventh information to the sixth node, wherein the eleventh information at least contains an identifier of the fifth node.

15. An information transmission apparatus, comprising at least one of the following:
a first sending unit, configured to send first information to a first node;
a second sending unit, configured to send second information to the first node;
a third sending unit, configured to send second information to a second node; and
a first receiving unit, configured to receive third information sent by the second node;
wherein the first node contains all target nodes associated with a first movement trajectory of a terminal, or contains a next hop node corresponding to the source node on the first movement trajectory; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the second node contains all target nodes associated with the second movement trajectory, or contains a next hop node corresponding to the source node on the second movement trajectory.

16. An information transmission apparatus, comprising at least one of the following:
a second receiving unit, configured to receive first information sent by a fourth node;
a third receiving unit, configured to receive second information sent by the fourth node;
a fourth receiving unit, configured to receive second information sent by a fifth node; and
a fourth sending unit, configured to send third information to the fifth node;
wherein the fourth node contains a source node, or contains a previous hop node corresponding to the target node on a first movement trajectory of a terminal; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the fifth node contains the source node, or contains a previous hop node corresponding to the target node on the second movement trajectory.

17. A source node, comprising: a first communication interface and a first processor; wherein the first communication interface is configured to perform at least one of the following:
sending first information to a first node;
sending second information to the first node;
sending the second information to a second node; and
receiving third information sent by the second node;
wherein the first node contains all target nodes associated with a first movement trajectory of a terminal, or contains a next hop node corresponding to the source node on the first movement trajectory; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the second node contains all target nodes associated with the second movement trajectory, or contains a next hop node corresponding to the source node on the second movement trajectory.

18. A target node, comprising: a second communication interface and a second processor; wherein the second communication interface is configured to perform at least one of the following:
receiving first information sent by a fourth node;
receiving second information sent by the fourth node;
receiving second information sent by a fifth node; and
sending third information to the fifth node;
wherein the fourth node contains a source node, or contains a previous hop node corresponding to the target node on a first movement trajectory of a terminal; the first movement trajectory comprises at least one predicted movement trajectory of the terminal;
wherein the first information comprises complete related information of the first movement trajectory, or comprises related information of at least one trajectory segment in the first movement trajectory;
wherein the second information is configured to indicate whether to feedback the third information; the third information contains complete related information of a second movement trajectory of the terminal, or contains related information of at least one trajectory segment in the second movement trajectory; the second movement trajectory comprises an actual movement trajectory of the terminal;
wherein the fifth node contains the source node, or contains a previous hop node corresponding to the target node on the second movement trajectory.

19. A source node, comprising: a first processor and a first memory for storing a computer program capable of running on the processor; wherein the first processor is configured to run the computer program to perform the method according to any one of claims 1 to 7.

20. A target node, comprising: a second processor and a second memory for storing a computer program capable of running on the processor; wherein the second processor is configured to run the computer program to perform the method according to any one of claims 8 to 14.

21. A storage medium, storing a computer program; wherein the computer program, when executed by a processor, implements the method according to any one of claims 1 to 7, or implements the method according to any one of claims 8 to 14.

22. A computer program product, comprising instructions; wherein the instructions, when executed by a processor, cause the processor to perform the method according to any one of claims 1 to 7, or the method according to any one of claims 8 to 14.
